Europäisches Patentamt

European Patent Office

Office européen des brevets

(19)

(11) EP 0 591 514 B1

## (12) FASCICULE DE BREVET EUROPEEN

(45) Date de publication et mention
de la délivrance du brevet:
**21.08.1996 Bulletin 1996/34**

(21) Numéro de dépôt: **93911810.5**

(22) Date de dépôt: **21.04.1993**

(51) Int Cl.6: **G01D 5/16**

(86) Numéro de dépôt international:
**PCT/FR93/00391**

(87) Numéro de publication internationale:
**WO 93/22621 (11.11.1993 Gazette 1993/27)**

(54) **DISPOSITIF ROTOR/STATOR DE MODULATION DE TENSION POUR MOTEUR ELECTRIQUE SANS BALAIS**

ROTOR/STATOR FÜR SPANNUNGSMODULATION FÜR SCHLEIFERLOSEN ELEKTROMOTOR

VOLTAGE MODULATION ROTOR/STATOR DEVICE FOR BRUSHLESS ELECTRIC MOTOR

(84) Etats contractants désignés:
**BE CH DE ES FR GB IT LI NL SE**

(30) Priorité: **24.04.1992 FR 9205102**

(43) Date de publication de la demande:
**13.04.1994 Bulletin 1994/15**

(73) Titulaire: **AEROSPATIALE Société Nationale Industrielle**
**F-75781 Paris Cédex 16 (FR)**

(72) Inventeurs:
• **ROSSI, Rinaldo**
 **F-75116 Paris (FR)**
• **GUERRERO, Jean-Yves**
 **F-78370 Plaisir (FR)**

(74) Mandataire: **Rinuy, Santarelli**
 **14, avenue de la Grande Armée**
 **75017 Paris (FR)**

(56) Documents cités:
 **EP-A- 0 211 477      WO-A-91/09408**
 **DE-A- 2 654 238**

• **PATENT ABSTRACTS OF JAPAN vol. 6, no. 198 (P-147)7 Octobre 1982 & JP-A-57 106 802 ( FUJITSU ).**

## Description

L'invention se rapporte à la modulation du courant dans les phases d'un moteur sans balais, et plus généralement à la modulation d'au moins deux courants en fonction de la rotation d'un rotor par rapport à un stator.

Généralement, la commutation du courant dans les phases d'un moteur sans balai est pilotée :

- soit par des capteurs à effet HALL qui fournissent des signaux logiques (tout ou rien) directement utilisés pour la commutation des phases,
- soit par un résolveur ou un codeur optique absolu fournissant la position relative du rotor du moteur par rapport à son stator. Cette solution beaucoup plus précise est bien adaptée à des moteurs à forme d'onde sinusoïdale. Elle est en revanche beaucoup plus chère et encombrante.

L'invention vise à obtenir une information continue et précise de la position relative rotor/stator d'un moteur sans balai, en vue de générer les signaux alternatifs destinés à piloter l'alimentation des phases de ce moteur, grâce à un dispositif qui soit peu encombrant et d'un prix peu élevé, et qui permette, de plus, par traitement des signaux obtenus, d'avoir une information tachymétrique de bonne qualité sur la vitesse de rotation de ce moteur.

Plus généralement, elle vise à obtenir une information continue et précise de la position ou de la vitesse relative d'un rotor par rapport à un stator, grâce à un dispositif de modulation de tension qui soit peu encombrant et d'un prix modéré.

Elle propose à cet effet un dispositif de modulation de tension comportant :

- un stator fixe comportant au moins une piste 5 annulaire de signal ayant un axe, connectée en des points angulairement répartis alternativement aux bornes positive et négative d'une source de tension continue et ayant une résistivité telle que son potentiel varie circonférentiellement de façon périodique entre une valeur maximale et une valeur minimale, ainsi qu'une pluralité d'au moins deux pistes collectrices centrées sur ledit axe et connectées chacune à une borne respective de sortie,
- un rotor centré sur ledit axe, adapté à être attelé à un corps rotatif d'entraînement tournant autour de l'axe, comportant une pluralité d'au moins deux balais de sortie en même nombre que la pluralité de pistes collectrices et adapté chacun à balayer une piste collectrice respective, ainsi qu'une pluralité de balais d'entrée en même nombre que les balais de sortie, chaque balai d'entrée étant connecté électriquement à un balai de sortie respectif, chaque balai d'entrée étant adapté à balayer une telle piste annulaire de signal à variation circonférentielle périodique de potentiel portée par le stator, ces balais d'entrée étant disposés en sorte de prélever, lors de la rotation du rotor par rapport au stator, des potentiels présentant un déphasage électrique donné.

On appréciera qu'un tel dispositif est un potentiomètre à rotation continue et à balais multiples (c'est-à-dire à sorties parallèles multiples).

Ce potentiomètre délivre en parallèle P informations périodiques au cours de la rotation du corps rotatif d'entraînement, P étant égal au nombre de balais de sortie. Lorsque ce potentiomètre sert au pilotage d'un moteur polyphasé sans balais, en ayant son rotor accouplé à celui dudit moteur, ce nombre P est en principe égal au nombre de phases de ce moteur (ou à un multiple de celui-ci) et ses bornes de sorties sont chacune utilisées pour piloter le courant de l'une des phases de moteur par l'intermédiaire d'une électronique de puissance de tout type connu approprié. Si N est le nombre de paire de pôles de ce moteur, les informations périodiques précitées ont une fréquence de préférence égale à N (voire à un sous-multiple de N) fois la fréquence de rotation du moteur. Par traitement électronique approprié de mise en forme des signaux appliqués par les balais de sortie aux pistes collectrices, on peut adapter la forme des informations périodiques issues du potentiomètre (forme en zig-zag, forme sinusoïdale ou trapézoïdale notamment) en fonction de la destination de ces informations périodiques (pilotage de moteur, mesures de vitesse, asservissements ...).

Grâce à sa simplicité, le dispositif de l'invention est d'un faible encombrement et d'un poids réduit.

La formation des pistes de signal ou collectrices fait appel à des technologies éprouvées et robustes connues des fabricants de potentiomètres, d'où une grande fiabilité d'utilisation ; il s'agit par exemple de pistes dites "pistes plastiques" en matériaux synthétiques conducteurs dont la gamme de stabilité et de fonctionnement en température (typiquement -55°C, 200°C) permet un très grand nombre d'applications.

Selon d'autres avantages de l'invention :

- le dispositif est précis et insensible aux variations de températures contrairement aux dispositifs à effet Hall ou optique,
- le dispositif est insensible aux perturbations magnétiques produites par le moteur contrairement aux dispositifs à effet Hall,
- le traitement des signaux délivrés permet d'obtenir facilement une information tachymétrique de bonne qualité très utile pour une régulation de vitesse ou pour des fonctions d'asservissement,
- le prix du capteur est peu élevé compte tenu de sa précision.

Selon des dispositions préférées de l'invention avantageusement combinées :

- le stator comporte une unique piste annulaire de signal balayée par chaque balai d'entrée, ces balais d'entrée étant décalés angulairement,

- lesdites pistes collectrices sont au nombre de deux et les balais d'entrée ont un décalage angulaire égal à $(i + \frac{1}{4}).\varphi$, avec i étant un entier, si $\varphi$ est la période angulaire avec laquelle varie circonférentiellement le potentiel de la piste de signal,

- lesdites pistes collectrices sont au nombre de trois, et les balais d'entrée ont des décalages angulaires de $(i + 1/3).\varphi$ et $(i + 2/3).\varphi$, avec i étant un entier, si $\varphi$ est la période angulaire avec laquelle varie circonférentiellement le potentiel de la piste de signal,

- la piste de signal est connectée en quatre points décalés de 90°, en alternance, soit à la borne positive, soit à la borne négative de la source de tension continue, grâce à quoi la période angulaire avec laquelle varie circonférentiellement le potentiel de la piste de signal est de $\pi$,

- lesdites pistes de signal et collectrices, et lesdits balais d'entrée et de sortie sont ménagés sur des faces transversales à l'axe,

- les balais d'entrée d'une part et les balais de sortie d'autre part, sont ménagés sur des faces distinctes du rotor et ladite piste de signal d'une part, et les pistes collectrices d'autre part, sont ménagées sur des faces distinctes du stator,

- tous les balais sont ménagés sur une même face du rotor, et toutes les pistes sont ménagées sur une même face du stator,

- lesdites pistes de signal et collectrices et lesdits balais d'entrée et de sortie sont ménagés sur des surfaces cylindriques du stator et du rotor respectivement,

- un élément de mise en forme de signal est connecté entre les pistes collectrices et les bornes de sortie,

- ledit corps rotatif d'entraînement est le rotor d'un moteur électrique sans balais dont chacune des phases est pilotée par le signal fourni par l'une, respective, des bornes de sortie,

- le rotor de ce dispositif comporte un manchon creux attelé en rotation à l'arbre dudit moteur,

- la résistivité des pistes collectrices est inférieure d'au moins deux ordres de grandeur à la résistivité de la piste de signal.

Des objets, caractéristiques et avantages de l'invention ressortent de la description qui suit, donnée à titre d'exemple non limitatif, en regard des dessins annexés sur lesquels :

- la figure 1 est une vue en coupe axiale d'un dispositif de modulation de tension conforme à l'invention, selon la ligne I-I de la figure 5,

- la figure 2 est une vue de l'une des faces transversales internes du stator,

- la figure 3 est une vue de l'autre des faces transversales internes du stator,

- la figure 4 est une vue de celle des faces transversales externes du rotor qui fait face à la face représentée à la figure 2,

- la figure 5 est une vue de l'autre des faces transversales externes du rotor,

- la figure 6 est un graphique montrant l'évolution au cours du temps des signaux $U_A$ et $U_B$ générés par le dispositif des figures 1 à 5,

- la figure 7 est une vue similaire à celle de la figure 5, mais avec trois collecteurs, selon une variante de réalisation,

- la figure 8 est un graphique similaire montrant les signaux générés par le dispositif de la figure 7,

- la figure 9 est un autre graphique similaire montrant les signaux générés par le dispositif des figures 1 à 5 avec traitement électronique de mise en forme, et

- la figure 10 est une vue en coupe d'encore une autre variante de dispositif de modulation de tension, intégrée à un moteur biphasé.

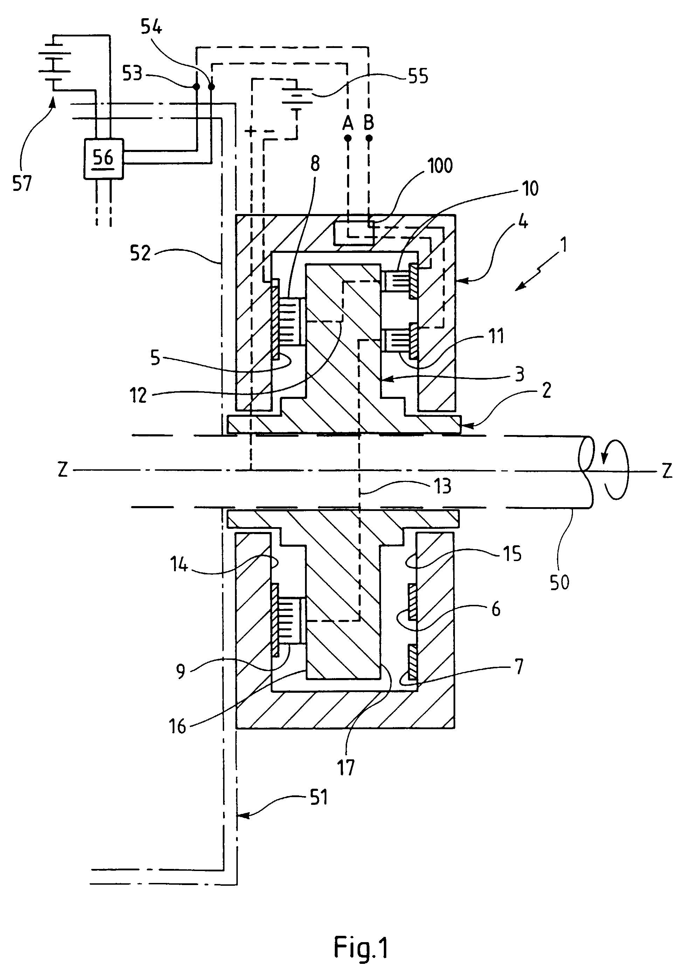

Les figures 1 à 5 représentent un dispositif de modulation de tension servant au pilotage des phases d'un moteur sans balais, désigné par la référence 1 dans son ensemble.

Ce dispositif comporte un manchon creux 2 attelé en rotation, par exemple par clavettage, à un arbre de commande 50, un rotor 3 solidaire de ce manchon 2 et un stator fixe 4, des bornes d'alimentation + et - et des bornes de sortie A et B.

Plus précisément l'arbre 50 entraînant en rotation le manchon 2 et donc le rotor 3 est ici l'arbre de sortie d'un moteur rotatif biphasé 51 comportant un carter 52 auquel le stator 4 est fixé par tout moyen connu approprié, tandis que les bornes de sorties A et B du dispositif sont connectées aux bornes de contrôle de commutation 53 et 54 du moteur biphasé.

Les bornes d'alimentation + et - du dispositif 1 sont connectées aux bornes d'une source stabilisée de tension continue 55 de tout type connu approprié (par exemple une source -10 V, + 10 V).

De manière classique, les bornes de contrôle de commutation (ou de pilotage) 53 et 54 sont connectées à un bloc électronique de puissance schématisé en 56 (de tout type connu approprié) adapté, en fonction des signaux de pilotage, à appliquer de façon appropriée aux phases (non représentées) du moteur, du courant fourni par une source de tension 57 (ici continue).

Le stator 4 comporte d'une part une piste annulaire de signal 5 (ici unique), d'autre part deux pistes annulaires collectrices 6 et 7, ces diverses pistes annulaires étant centrées sur l'axe Z-Z de l'arbre de commande 50.

Le rotor 3 comporte deux balais d'entrée 8 et 9 adaptés tous deux à balayer la piste annulaire de signal 5, ainsi que deux balais de sortie 10 et 11, respectivement connectés aux deux balais d'entrée 8 et 9 au sein du rotor 3 par des liaisons 12 et 13, et adaptés à balayer respectivement les deux pistes annulaires collectrices 6 et 7.

Dans l'exemple considéré, les pistes annulaires 5, 6 et 7 sont ménagées sur des faces transversales 14 et 15 du stator 4, tandis que les balais 8 à 11 sont ménagés sur des faces transversales 16 et 17 du rotor, les balais d'entrée 8 et 9 étant situés à la même distance de l'axe Z-Z, mais décalés angulairement l'un de l'autre d'un angle $\alpha$ non nul, tandis que les balais de sortie 10 et 11 sont situés à des distances différentes vis à vis de l'axe Z-Z, avec un éventuel décalage angulaire ici égal à 0.

L'aménagement des pistes et des balais sur des faces transversales a pour avantage de permettre de donner au dispositif 1 un très faible encombrement axial.

En variante non représentée, les pistes et les balais peuvent être disposés sur des surfaces cylindriques en regard du stator et du rotor respectivement, ce qui a pour avantage de permettre un très faible encombrement radial.

Cette piste annulaire de signal est connectée en une pluralité de premiers points 20 à la borne d'alimentation + et en une pluralité de seconds points 21 en même nombre que les premiers points 20 à la borne d'alimentation -. Les premiers points 20 et les seconds points 21 sont placés en alternance en étant régulièrement répartis angulairement ; les premiers et seconds points sont au nombre de deux et deux, et alternent donc avec un décalage de 90°. La résistivité de la piste annulaire de signal est suffisamment élevée pour que le potentiel de cette piste varie circonférentiellement entre les valeurs maximale $V_{max}$ et minimale $V_{min}$ du potentiel de la source de courant continu 55 sans dissipation notable de puissance. Ce potentiel varie linéairement en fonction de l'angle dont on s'écarte d'un point 20 vers un point 21 et réciproquement, avec ici une période angulaire de $\pi$.

Bien sûr, en variante non représentée, il peut y avoir autant de sources continues qu'il y a de couples de premier/second points.

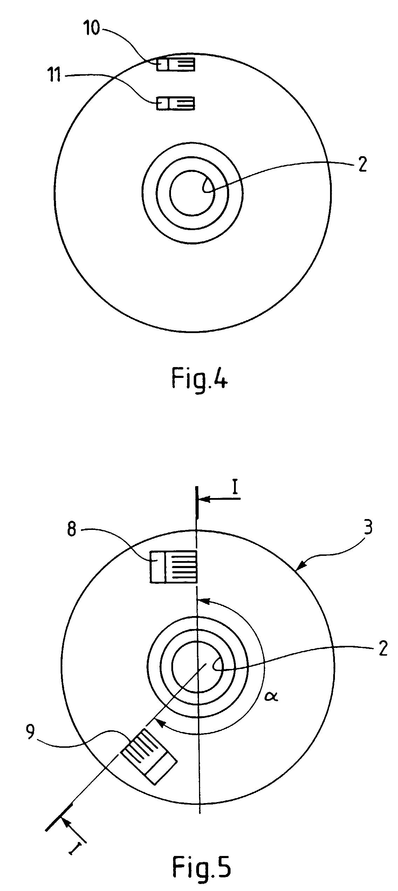

Les balais d'entrée sont disposés en sorte de prélever des potentiels présentant, au cours de la rotation du rotor par rapport au stator, un déphasage électrique de $\pi/2$. C'est pour cela que par rapport à la période angulaire $\pi$, le décalage angulaire $\alpha$ entre ceux-ci vaut $(i + \frac{1}{4}) \pi$, i étant un entier quelconque compris entre 0 et 3. Dans l'exemple représenté $\alpha$ vaut 225° (voir figure 5).

Les pistes annulaires collectrices 6 et 7 sont elles aussi conductrices, avec de préférence une résistivité bien plus faible (par exemple dans un rapport 100 à 1000) que celle de la piste de signal. Elles sont respectivement connectées aux bornes de sortie A et B.

A titre d'exemple, le dispositif 1 a un diamètre externe de 45 mm, une épaisseur de 10 mm et le diamètre interne du manchon est de 10 mm. La piste de signal a un diamètre de 35 mm, une largeur de 3 mm, une épaisseur de 0,3 mm, une résistance vue des bornes de la source de tension de 10kΩ environ. Ces pistes avaient été réalisées par la Société EUROFARAD selon une technologie classique des pistes plastiques chargées en particules conductrices.

On comprendra que la borne A connectée à la piste annulaire collectrice 7 est au même potentiel que le balai 10, donc au même potentiel que le balai 8, et donc au potentiel de la portion de la piste 5 avec laquelle le balai 8 est en contact au moment considéré. De même la borne B est, par la piste 6, le balai 11 et le balai 9, au potentiel de la portion de la piste 5 avec laquelle le balai 9 est en contact à l'instant considéré.

La piste de signal constitue avec les balais d'entrée une série annulaire de diviseurs potentiométriques (en nombre égal au nombre de tronçons de piste séparés par les points 20 et 21.

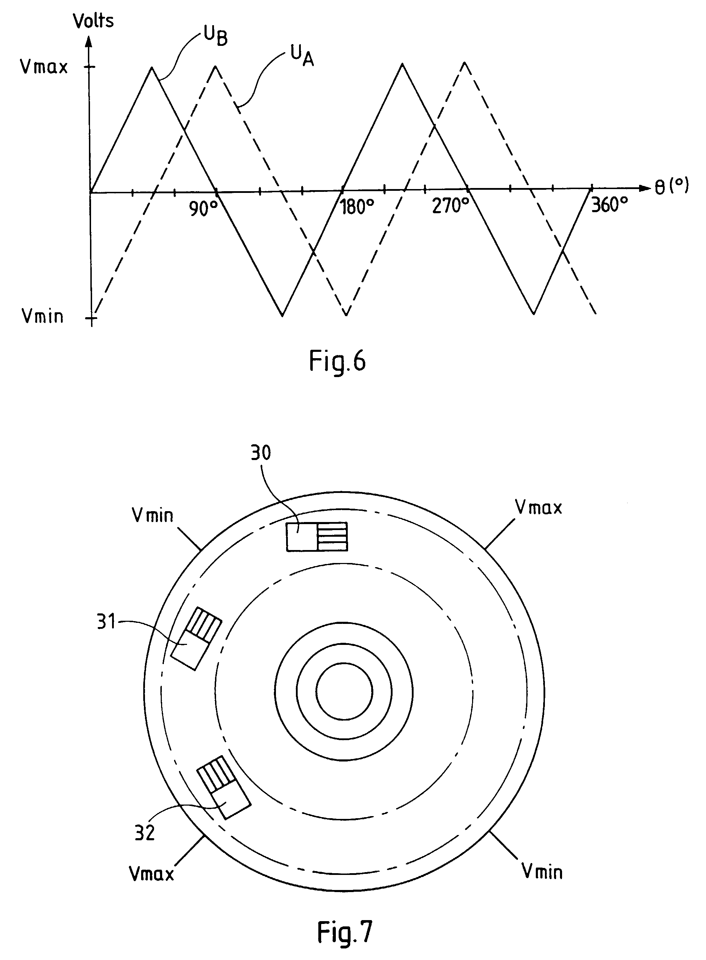

Si l'on désigne par $\theta$ la position angulaire du rotor par rapport au stator, en prenant pour position d'origine celle de la figure 5, alors l'évolution des tensions aux bornes A et B est donnée par la figure 6, avec des variations entre $V_{min}$ et $V_{max}$.

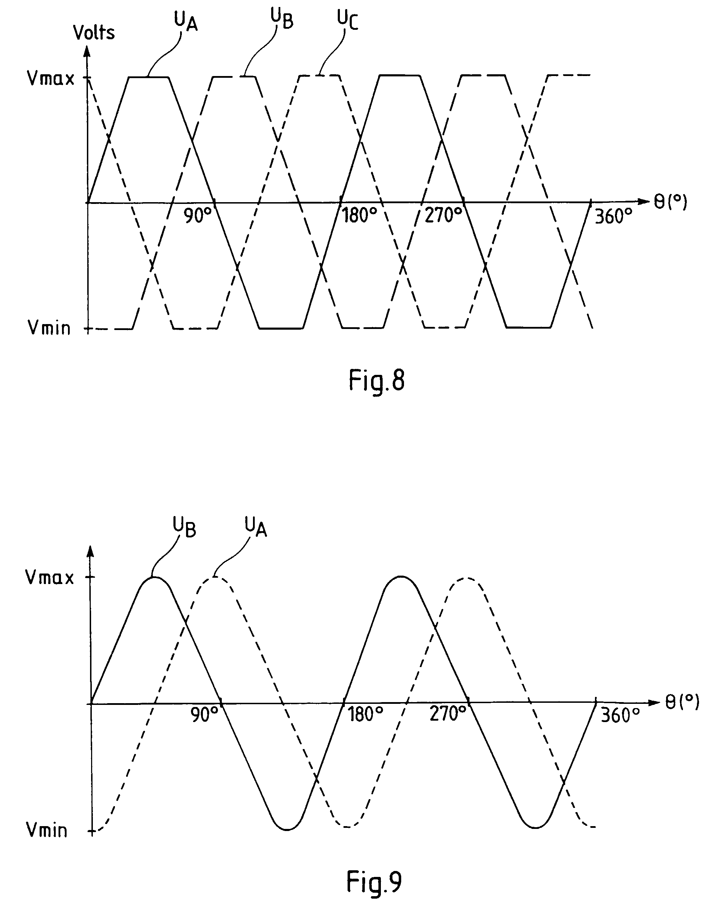

En variante, on intercale entre les pistes 6 et 7 et les bornes A et B un élément de traitement de mise en forme de signal 100 adapté à convertir des signaux alternatifs à variation linéaire en signaux alternatifs sinusoïdaux (par exemple un circuit intégré générateur de signaux de type AD 639 de marque ANALOG DEVICES) : on obtient alors les courbes de la figure 9. Ceci permet de piloter le courant dans un moteur biphasé multipolaire (N paires de poles) à champ sinusoïdal, par exemple du type de celui décrit dans le document EP-0.312.464. Selon encore une autre variante de réalisation non représentée, on intercale entre les pistes 6 et 7 et les bornes A et B un écrêteur de signal, auquel cas on obtient des courbes similaires à celles de la figure 6, à ceci près que, du fait de l'écretage, ces courbes sont trapézoïdales. D'autres formes de conversion de forme de signal peuvent être choisies.

Selon encore une autre variante de réalisation, on peut faire varier la résistivité de la piste de signal le long de sa circonférence grâce à quoi on peut obtenir, sans traitement de mise en forme entre les pistes 6 et 7 et les bornes A et B, des variations non linéaires des potentiels $U_A$ et $U_B$ en fonction de l'angle $\theta$.

On appréciera que les tensions $U_A$ et $U_B$ délivrées en A et B sont utilisables pour alimenter les deux phases du moteur 51 dont l'arbre de sortie 50 entraîne le rotor 3.

De manière préférée, la piste annulaire de signal 5 est unique ; les balais d'entrée, les balais de sortie, les pistes collectrices et les bornes de sortie sont en un même nombre égal au nombre des phases du moteur que l'on veut alimenter, et le nombre de premiers points (ou de seconds points) est égal au nombre de paires de poles du moteur (d'autres nombres sont possibles sous réserve d'un traitement électronique approprié des signaux de sortie).

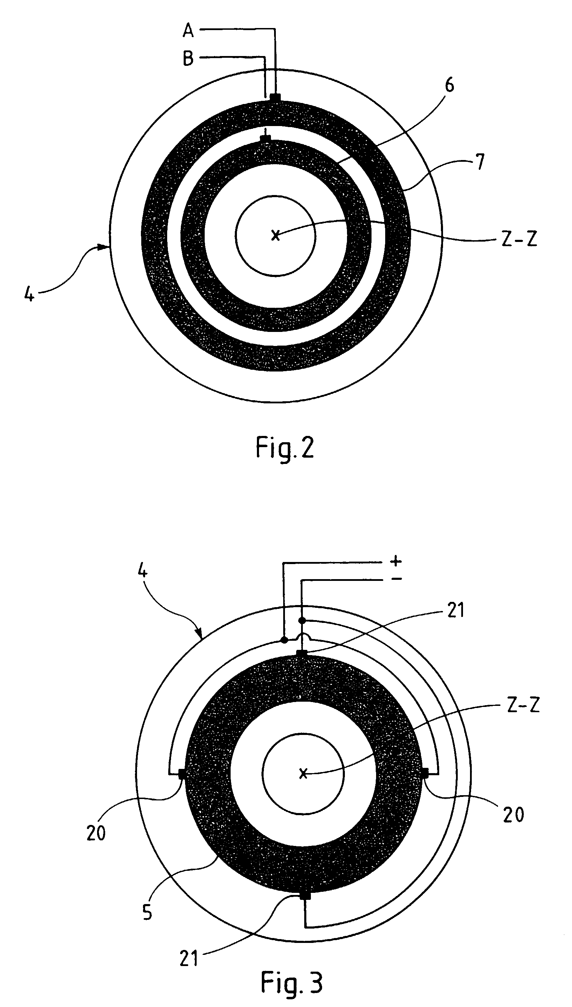

C'est ainsi que pour commander un moteur triphasé à deux paires de pôles, on prévoît de préférence trois pistes collectrices, trois balais de sortie, et trois balais d'entrée 30, 31 et 32 placés dans la disposition de la figure 7, avec, pour la piste de signal associée, deux premiers points connectés à $V_{max}$, deux seconds points connectés à $V_{min}$, disposés à 45, 135, 225 et 315° (positionnés sur la figure 7 pour une bonne compréhension), les balais d'entrée étant disposés angulairement en des positions 0, 60 et 120°, c'est-à-dire $(i + 1/3).\pi$ et $(i + 2/3).\pi$, avec i étant un entier quelconque, étant précisé que la période angulaire de la variation de potentiel le long de la piste de signal vaut $\pi$, comme dans la figure 2. Après un écrétage on obtient ainsi les courbes $U_A$, $U_B$ et $U_C$ représentées à la figure 8, correspondant aux potentiels prélevés par les balais 30, 31 et 32 respectivement, avec un déphasage électrique de 120°.

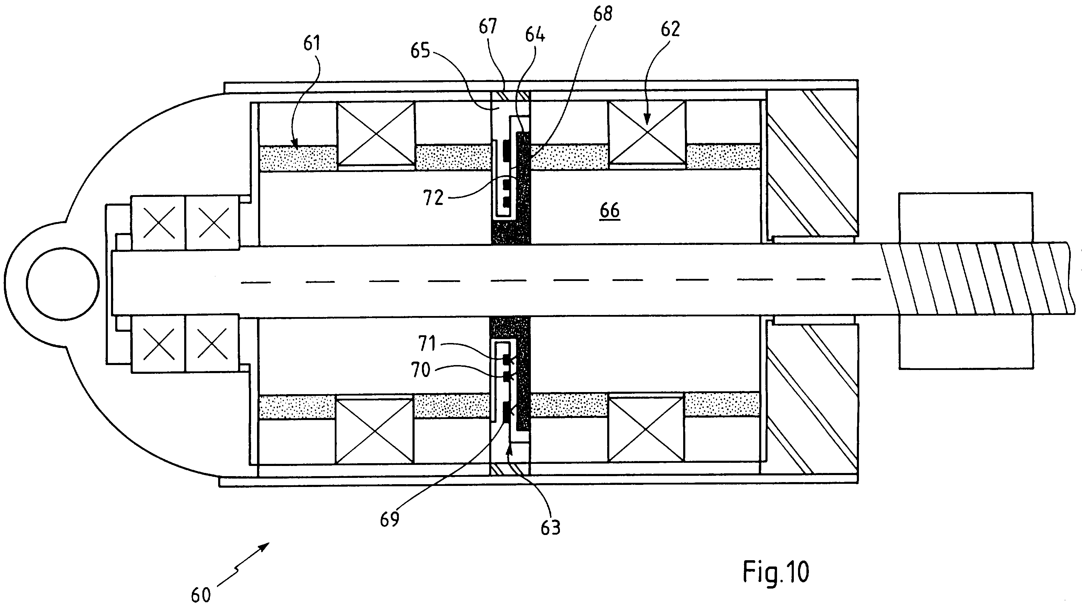

La figure 10 présente une variante de réalisation et d'implantation d'un dispositif de modulation de tension conforme à l'invention.

Il y est représenté un moteur biphasé 60 conforme au document EP-0.312.464 précité avec deux étages 61 et 62 de pièces polaires + bobines, correspondant aux deux phases à alimenter. Le dispositif de modulation de tension 63 est disposé entre ces deux étages. Pour minimiser l'encombrement axial de ce dispositif, le rotor 64 et le stator 65 sont des couronnes de section en L respectivement fixées au rotor 66 et au stator 67 du moteur, ayant seulement deux faces en regard, à savoir une unique face transversale statorique 68 sur laquelle sont ménagées aussi bien la piste de signal 69 que les pistes collectrices 70 et 71 et une unique face transversale rotorique 72 portant les divers balais d'entrée et de sortie.

Le traitement des signaux $U_A$ et $U_B$ permet d'obtenir une information tachymétrique par dérivation des signaux et démodulation. Ainsi par exemple, avec des signaux de type de ceux de la figure 9, on a, $V_{min}$ et $V_{max}$ symétriques par rapport à une valeur nulle peuvent s'écrire $-V_{ref}$ et $+V_{ref}$ :

$$U_A = V_{ref} \, SIN \, 2\,\theta$$

$$U_B = V_{ref} \, COS \, 2\,\theta$$

par dérivation :

$$U'_A = 2 \, V_{ref} \, \dot{\theta} \, COS \, 2\,\theta$$

$$U'_B = -2 \, V_{ref} \, \dot{\theta} \, SIN \, 2\,\theta$$

et :

$$V(\dot{\theta}) = U'_A \, U_B - U'_B \, U_A = 2(V_{ref})^2 \dot{\theta}$$

Il va de soi que la description qui précède n'a été proposée qu'à titre d'exemple non limitatif et que de nombreuses variantes peuvent être proposées par l'homme de l'art sans sortir du cadre de l'invention. Ainsi par exemple le nombre de phases ou de couples de premiers points et seconds points 20 et 21 peut être différent de deux ou trois (par exemple 1, 4, etc ...).

## Revendications

1. Dispositif (1, 63) de pilotage de l'alimentation des phases d'un moteur électrique sans balais comportant des bornes de commutation (53, 54) comportant :

   - un stator fixe (4, 65) comportant au moins une piste annulaire de signal (5, 69) ayant un axe (Z-Z), connectée en des points (20, 21) angulairement répartis alternativement aux bornes positive et négative d'une source de tension continue (55) et ayant une résistivité telle que son potentiel varie circonférentiellement de façon périodique entre une valeur maximale et une valeur minimale, ainsi qu'une pluralité d'au moins deux pistes collectrices (6, 7 ; 70, 71) centrées sur ledit axe et connectées chacune à une borne respective de sortie (A, B), chacune de ces bornes de sortie étant connectée à l'une respective desdites bornes de commutation,
   - un rotor (3, 64) centré sur ledit axe, adapté à être attelé à un corps rotatif d'entraînement (50) du moteur électrique sans balais tournant autour de l'axe (Z-Z), comportant une pluralité d'au moins deux balais de sortie (10, 11) en même nombre que la pluralité de pistes collectrices et adapté chacun à balayer une piste collectrice respective, ainsi qu'une pluralité de balais d'entrée (8, 9) en même nombre que les balais de sortie, chaque balai d'entrée étant connecté électriquement à un balai de sortie respectif, chaque balai d'entrée étant adapté à balayer une telle piste annulaire de signal à variation circonférentielle périodique de potentiel portée par le stator, ces balais d'entrée étant disposés en sorte de prélever, lors de la rotation du rotor par rapport au stator, des potentiels présentant un déphasage électrique donné.

2. Dispositif selon la revendication 1, caractérisé en ce que ledit corps rotatif d'entraînement est le rotor dudit moteur électrique sans balais (51).

3. Dispositif selon la revendication 2, caractérisé en ce que le rotor de ce dispositif comporte un manchon creux (2) attelé en rotation à l'arbre dudit moteur.

4. Dispositif selon l'une quelconque des revendications 1 à 3, caractérisé en ce que le stator comporte une unique piste annulaire de signal (5, 69) balayée par chaque balai d'entrée, ces balais d'entrée étant décalés angulairement ($\alpha$).

5. Dispositif selon la revendication 4, caractérisé en ce que lesdites pistes collectrices (6, 7 ; 70, 71) sont au nombre de deux et les balais d'entrée ont un décalage angulaire égal à $(i + \frac{1}{4}).\varphi$, avec i étant un entier, si $\varphi$ est la période angulaire avec laquelle varie circonférentiellement le potentiel de la piste de signal.

6. Dispositif selon la revendication 4, caractérisé en ce que lesdites pistes collectrices sont au nombre de trois, et les balais d'entrée ont des décalages angulaires de (i + 1/3).φ et (i + 2/3).φ, avec i étant un entier, si φ est la période angulaire avec laquelle varie circonférentiellement le potentiel de la piste de signal.

7. Dispositif selon l'une quelconque des revendications 4 à 6, caractérisé en ce que la piste de signal est connectée en quatre points (20, 21) décalés de 90°, en alternance, soit à la borne positive, soit à la borne négative de la source de tension continue, grâce à quoi la période angulaire avec laquelle varie circonférentiellement le potentiel de la piste de signal est de π.

8. Dispositif selon l'une quelconque des revendications 1 à 7, caractérisé en ce que lesdites pistes de signal et collectrices, et lesdits balais d'entrée et de sortie sont ménagés sur des faces transversales à l'axe.

9. Dispositif selon la revendication 8, caractérisé en ce que les balais d'entrée (8, 9) d'une part et les balais de sortie (10, 11) d'autre part, sont ménagés sur des faces distinctes du rotor et ladite piste de signal d'une part, et les pistes collectrices d'autre part, sont ménagées sur des faces distinctes du stator.

10. Dispositif selon la revendication 8, caractérisé en ce que tous les balais sont ménagés sur une même face du rotor, et toutes les pistes sont ménagées sur une même face du stator.

11. Dispositif selon l'une quelconque des revendications 1 à 7, caractérisé en ce que lesdites pistes de signal et collectrices et lesdits balais d'entrée et de sortie sont ménagés sur des surfaces cylindriques du stator et du rotor respectivement.

12. Dispositif selon l'une quelconque des revendications 1 à 11, caractérisé en ce qu'un élément de mise en forme de signal (100) est connecté entre les pistes collectrices et les bornes de sortie.

13. Dispositif selon l'une quelconque des revendications 1 à 12, caractérisé en ce que la résistivité des pistes collectrices est inférieure d'au moins deux ordres de grandeur à la résistivité de la piste de signal.

**Patentansprüche**

1. Vorrichtung (1, 63) zur Steuerung der Speisung der Phasen eines schleiferlosen Elektromotors, der Stromwendungsanschlüsse (53, 54) umfaßt, die die folgenden Merkmale umfaßt:

- einen festen Stator (4, 65), der mindestens eine ringförmige Signalspur (5, 69) umfaßt, die eine Achse (Z-Z) hat, wobei die Signalspur (5, 69) bei winkelförmig verteilten Punkten (20, 21) abwechselnd mit den positiven und negativen Anschlüssen einer Gleichspannungsquelle (55) verbunden ist und wobei die Signalspur (5, 69) ferner einen derartigen Widerstand hat, daß ihr Potential in Umfangsrichtung periodisch zwischen einem Maximalwert und einem Minimalwert variiert,
wobei der Stator (4, 65) ebenso eine Vielzahl von mindestens zwei Sammelspuren (6, 7; 70, 71) umfaßt, die zentrisch zu der besagten Achse ausgerichtet sind und von denen jede mit je einem Ausgangsanschluß (A, B) verbunden ist, wobei jeder dieser Ausgangsanschlüsse mit je einem der besagten Stromwendungsanschlüsse verbunden ist,
- einen zentrisch zu der besagten Achse ausgerichteten Rotor (3, 64), der dafür ausgelegt ist, an einen sich um die Achse (Z-Z) drehenden Antriebsdrehkörper (50) des schleiferlosen Elektromotors angekuppelt zu werden, wobei der Rotor (3, 64) eine Vielzahl von mindestens zwei Ausgangsbürsten (10, 11) umfaßt, und zwar in einer Anzahl, die gleich der Vielzahl von Sammelspuren ist,
wobei jede Ausgangsbürste dafür ausgelegt ist, auf je einer Sammelspur zu schleifen,
und der Rotor (3, 64) umfaßt ebenso eine Vielzahl von Eingangsbürsten (8, 9), und zwar in einer Anzahl, die gleich der Anzahl der Ausgangsbürsten ist, wobei jede Eingangsbürste elektrisch mit je einer Ausgangsbürste verbunden ist und wobei jede Eingangsbürste dafür ausgelegt ist, auf einer derartigen ringförmigen Signalspur mit in Umfangsrichtung periodisch variierendem Potential zu schleifen, die durch den Stator getragenen wird,
wobei diese Eingangsbürsten derart angeordnet sind, daß sie bei der Drehung des Rotors bezüglich des Stators Potentiale abnehmen, die eine gegebene elektrische Phasenverschiebung aufweisen.

2. Vorrichtung gemäß Anspruch 1, dadurch gekennzeichnet, daß besagter Antriebsdrehkörper der Läufer des besagten schleiferlosen Elektromotors (51) ist.

3. Vorrichtung gemäß Anspruch 2, dadurch gekennzeichnet, daß der Rotor dieser Vorrichtung eine Aufstecknabe (2) umfaßt, die mitdrehend an die Welle des besagten Motors angekuppelt ist.

4. Vorrichtung gemäß einem der Ansprüche 1 bis 3, dadurch gekennzeichnet, daß der Stator eine einzelne ringförmige Signalspur (5, 69) umfaßt, auf der jede Eingangsbürste schleift, wobei diese Eingangsbürsten um den Winkel (a) versetzt angeordnet sind.

5. Vorrichtung gemäß Anspruch 4, dadurch gekennzeichnet, daß die besagten Sammelspuren (6, 7; 70, 71) in einer Anzahl vorhanden sind, die gleich zwei ist, und daß die Eingangsbürsten eine Winkelverschiebung haben, die gleich $(i + 1/4).\varphi$ ist, wobei i eine ganze Zahl ist, wenn $\varphi$ die Winkelperiode ist, mit der das Potential der Signalspur entlang der Umfangsrichtung variiert.

6. Vorrichtung gemäß Anspruch 4, dadurch gekennzeichnet, daß die besagten Sammelspuren in einer Anzahl vorhanden sind, die gleich drei ist, und daß die Eingangsbürsten Winkelverschiebungen von $(i + 1/3).\varphi$ und $(i + 2/3).\varphi$ haben, wobei i eine ganze Zahl ist, wenn $\varphi$ die Winkelperiode ist, mit der das Potential der Signalspur entlang der Umfangsrichtung variiert.

7. Vorrichtung gemäß einem der Ansprüche 4 bis 6, dadurch gekennzeichnet, daß die Signalspur mit vier Punkten (20, 21) verbunden ist, die um 90° versetzt angeordnet sind, und zwar abwechselnd mit dem positiven Anschluß und mit dem negativen Anschluß der Gleichspannungsquelle, wodurch die Winkelperiode, mit der das Potential der Signalspur in Umfangsrichtung variiert, gleich $\pi$ ist.

8. Vorrichtung gemäß einem der Ansprüche 1 bis 7, dadurch gekennzeichnet, daß die besagten Signal- und Sammelspuren und die besagten Eingangs- und Ausgangsbürsten an Flächen angeordnet sind, die quer zu der Achse liegen.

9. Vorrichtung gemäß Anspruch 8, dadurch gekennzeichnet, daß die Eingangsbürsten (8, 9) zum einen und die Ausgangsbürsten (10, 11) zum anderen an unterschiedlichen Flächen des Rotors angeordnet sind und daß die besagte Signalspur zum einen und die Sammelspuren zum anderen an unterschiedlichen Flächen des Stators angeordnet sind.

10. Vorrichtung gemäß Anspruch 8, dadurch gekennzeichnet, daß alle Bürsten auf derselben Fläche des Rotors angeordnet sind, und dadurch, daß alle Spuren auf derselben Fläche des Stators angeordnet sind.

11. Vorrichtung gemäß einem der Ansprüche 1 bis 7, dadurch gekennzeichnet, daß die besagten Signal- und Sammelspuren und die besagten Eingangs- und Ausgangsbürsten jeweils auf zylindrischen Oberflächen des Stators und des Rotors angeordnet sind.

12. Vorrichtung gemäß einem der Ansprüche 1 bis 11, dadurch gekennzeichnet, daß ein Signalumformungselement (100) zwischen die Sammelspuren und die Ausgangsanschlüsse geschaltet ist.

13. Vorrichtung gemäß einem der Ansprüche 1 bis 12, dadurch gekennzeichnet, daß der Widerstand der Sammelspuren um mindestens zwei Größenordnungen kleiner ist als der Widerstand der Signalspur.

## Claims

1. Control device (1, 63) for supplying the phases of a brushless electric motor having commutation terminals (53, 54), including:

   - a fixed stator (4, 65) including at least one annular signal track (5, 69) with an axis (Z-Z), connected at angularly spaced points (20, 21) alternately to the positive and negative terminals of a continuous voltage source (55) and have a resistivity such that its potential varies circumferentially in a periodic manner between a maximum value and a minimum value, as well as a plurality of at least two collecting tracks (6, 7; 70, 71) centred on the said axis and each connected to a respective output terminal (A, B), each of these output terminals being connected to the respective one of the said commutation terminals,

   - a rotor (3, 64) centred on the said axis, adapted to be coupled to a rotary driving body (50) of the brushless electric motor rotating about the axis (Z-Z), having a plurality of at least two output brushes (10, 11) of the same number as the plurality of collecting tracks and each adapted to sweep a respective collecting track, as well as a plurality of input brushes (8, 9) of the same number as the output brushes, each input brush being connected electrically to a respective output brush, each input brush being adapted to sweep such an annular signal track with a periodic circumferential variation in potential carried by the stator, these input brushes being disposed so as to pick up, when the rotor rotates with respect to the stator, potentials having a given electrical phase shift.

**2.** Device according to Claim 1, characterised in that the said rotary driving body is the rotor of the said brushless electric motor (51).

**3.** Device according to Claim 2, characterised in that the rotor of this device has a hollow sleeve (2) coupled in rotation to the spindle of the said motor.

**4.** Device according to any one of Claims 1 to 3, characterised in that the stator has a single annular signal track (5, 69) swept by each input brush, these input brushes being angularly offset ($\alpha$).

**5.** Device according to Claim 4, characterised in that the said collecting tracks (6, 7; 70, 71) are two in number and the input brushes have an angular offset equal to $(i + \frac{1}{4}).\varphi$, with i being an integer, if $\varphi$ is the angular period with which the potential of the signal track varies circumferentially.

**6.** Device according to Claim 4, characterised in that the said collecting tracks are three in number, and the input brushes have angular offsets of $(i + 1/3).\varphi$ and $(i + 2/3).\varphi$, with i being an integer, if $\varphi$ is the angular period with which the potential of the signal track varies circumferentially.

**7.** Device according to any one of Claims 4 to 6, characterised in that the signal track is connected at four points (20, 21) offset by 90°, in alternation, either to the positive terminal, or to the negative terminal of the continuous voltage source, by virtue of which the angular period with which the potential of the signal track varies circumferentially is $\pi$.

**8.** Device according to any one of Claims 1 to 7, characterised in that the said signal and collecting tracks, and the input and output brushes, are arranged on faces transverse to the axis.

**9.** Device according to Claim 8, characterised in that the input brushes (8, 9) on the one hand and the output brushes (10, 11) on the other hand, are arranged on distinct faces of the rotor and the said signal track on the one hand, and the collecting tracks on the other hand, are arranged on distinct faces of the stator.

**10.** Device according to Claim 8, characterised in that all the brushes are arranged on the same face of the rotor, and all the tracks are arranged on the same face of the stator.

**11.** Device according to any one of Claims 1 to 7, characterised in that the said signal and collecting tracks and the said input and output brushes are arranged on cylindrical surfaces of the stator and rotor respectively.

**12.** Device according to any one of Claims 1 to 11, characterised in that a signal shaping element (100) is connected between the collecting tracks and the output terminals.

**13.** Device according to any one of Claims 1 to 12, characterised in that the resistivity of the collecting tracks is lower by at least two orders of magnitude than the resistivity of the signal track.

Fig.1

A

B

6

7

Z-Z

4

x

## Fig.2

4

+
−

21

Z-Z

20

20

5

21

x

5

## Fig.3

Fig.4

Fig.5

Fig.6

Fig.7

Fig.8

Fig.9

Fig.10

EP 0 591 514 B1